# EUROPÄISCHE PATENTSCHRIFT

(11) **EP 1 622 800 B1**
(45) Veröffentlichungstag und Bekanntmachung des Hinweises auf die Patenterteilung: **25.10.2006**
(21) Anmeldenummer: 04729357.6
(22) Anmeldetag: 24.04.2004
(51) Int. Cl.: B60T 13/68, F03D 7/02

(54) **BREMSEINRICHTUNG FÜR EINE WINDENERGIEANLAGE MIT EINEM DIE WINDENERGIE IN EINE DREHBEWEGUNG UMSETZENDEN ROTOR UND VERFAHREN ZUM BETRIEB EINER DERARTIGEN BREMSEINRICHTUNG**
BRAKING DEVICE FOR A WIND POWER PLANT COMPRISING A ROTOR, WHICH CONVERTS WIND ENERGY INTO ROTATIONAL MOTION, AND METHOD FOR OPERATING A BRAKING DEVICE OF THIS TYPE
DISPOSITIF DE FREINAGE POUR INSTALLATION ÉOLIENNE, COMPRENANT UN ROTOR CONVERTISSANT L'ÉNERGIE ÉOLIENNE EN MOUVEMENT ROTATIF ET PROCÉDÉ D'EXPLOITATION D'UN DISPOSITIF DE FREINAGE DE CE TYPE

(30) Priorität: 07.05.2003 DE 10320580
(43) Veröffentlichungstag der Anmeldung: 08.02.2006
(73) Patentinhaber: Bosch Rexroth AG, 70184 Stuttgart (DE)
(72) Erfinder: NEUMANN, Joachim, 97816 Lohr (DE); EIGENBROD, Karlheinz, 97737 Gemünden (DE); BEHRENS, Harald, 31249 Hohenhameln (DE)
(86) Internationale Anmeldenummer: PCT/EP2004/004362
(87) Internationale Veröffentlichungsnummer: WO 2004/098968

(56) Entgegenhaltungen:
- WO-A-03/011666
- GB-A- 2 206 930
- US-B1- 6 254 197

## Beschreibung

Die Erfindung betrifft eine Bremseinrichtung für eine Windenergieanlage mit einem die Windenergie in eine Drehbewegung umsetzenden Rotor gemäß dem Oberbegriff des Anspruchs 1 und Verfahren zum Betrieb einer derartigen Windenergieanlage.

Eine derartige, insbesondere für Windenergieanlagen vorgesehene Bremseinrichtung sowie ein Verfahren zum Betrieb dieser Bremseinrichtung ist aus der US-PS 6 254 197 B1 bekannt. Das Bremssystem besitzt eine von einem hydraulischen Zylinder entgegen der Kraft einer Feder betätigte Bremse. Sie ist als sogenannte passive Bremse ausgebildet, d. h. sie ist im Ruhezustand wirksam und wird erst bei Druckmittelzufuhr gelöst. Die Druckmittelzufuhr zu dem Zylinder ist durch ein Schaltventil gesteuert, das in Abhängigkeit von einem Steuersignal jeweils eine von zwei Schaltstellungen einnimmt. In der einen Schaltstellung verbindet das Schaltventil den Zylinder mit einem von einer hydraulischen Pumpe aufgeladenen Druckspeicher und verringert hierdurch die Bremskraft. In der anderen Schaltstellung leitet das Schaltventil Druckmittel aus dem Zylinder in einen Tank, verringert hierdurch den Druck in dem Zylinder und vergrößert somit die Bremskraft. Eine als Geschwindigkeitsregelung in Form einer Zwei-Punkt-Regelung ausgebildete Regeleinrichtung vergleicht in aufeinanderfolgenden Zeitpunkten die Ist-Geschwindigkeit mit der Soll-Geschwindigkeit. Ist die Ist-Geschwindigkeit kleiner als die Soll-Geschwindigkeit, wird das Schaltventil in die Stellung geschaltet, in der der Bremse Druckmittel zugeführt wird, und dadurch die Bremskraft verringert. In entsprechender Weise wird, wenn die Ist-Geschwindigkeit größer als die Soll-Geschwindigkeit ist, das Schaltventil in die andere Stellung geschaltet, in der Druckmittel von der Bremse abgeführt wird. Hierdurch wird die Bremskraft vergrößert. Als Alternative zu der Ausbildung der Regeleinrichtung als Geschwindigkeitsregelung ist eine Ausbildung der Regeleinrichtung als Druckregelung beschrieben. Hierbei werden in aufeinanderfolgenden Zeitpunkten aus der Beschleunigung oder der Verzögerung der Maschine Soll-Druckwerte berechnet und das Schaltventil in Abhängigkeit von dem Vorzeichen der Druckabweichung derart von der einen in die andere Schaltstellung geschaltet, daß sich ein gewünschter Geschwindigkeitsverlauf ergibt. Nachteilig ist, daß die Verwendung von Schaltventilen zu Druckschwingungen im Bremssystem führt.

Der Erfindung liegt die Aufgabe zugrunde, eine Bremseinrichtung der eingangs genannten Art zu schaffen und ein Verfahren zum Betrieb einer derartigen Einrichtung anzugeben, die das Verhalten der Windenergieanlage während des Bremsens des Rotors verbessern, insbesondere die mechanischen Belastungen des Getriebes während des Bremsens verringern.

Diese Aufgabe wird hinsichtlich der Bremseinrichtung durch die im Anspruch 1 angegebenen Merkmale und hinsichtlich des Verfahrens zu ihrem Betrieb durch die Merkmale der Ansprüche 13 bzw. 16 gelöst. Die Erfindung erlaubt es, den Rotor so abzubremsen, daß während des Bremsens nur geringe mechanische Belastungen auf den im Wesentlichen aus Rotor, Getriebe und Generator gebildeten Antriebsstrang der Windenergieanlage ausgeübt werden. Zusätzlich zu dem Abbremsen des Rotors aus der Betriebsdrehzahl bis zum Stillstand gemäß den im Anspruch 13 angegebenen Verfahrensschritten erlauben die im Anspruch 16 angegebenen Verfahrensschritte, die Rotordrehzahl bei einem kurzzeitigen Ausfall des stützenden elektrischen Netzes zunächst konstant zu halten und in Fällen, in denen das Netz nicht innerhalb eines einstellbaren Zeitraums wiedergekehrt ist, den Rotor bis zum Stillstand abzubremsen. Die Erfindung ist besonders geeignet für den Einsatz bei "stall"-Windenergieanlagen, d. h. Windenergieanlagen ohne "pitch"-Verstellung der Rotorflügel.

Vorteilhafte Weiterbildungen der Erfindung sind hinsichtlich der Bremseinrichtung in den Ansprüchen 2 bis 12 und hinsichtlich des Verfahrens zum Betrieb der Bremseinrichtung in den Ansprüchen 14 und 15 sowie 17 und 18 angegeben.

Die Erfindung wird im folgenden mit ihren weiteren Einzelheiten anhand eines in den Zeichnungen dargestellten Ausführungsbeispiels näher erläutert. Es zeigen
- Figur 1: eine schematische Darstellung eines mit einer passiven Bremse versehenen Anstriebsstrangs einer Windenergieanlage mit einer Bremseinrichtung gemäß der Erfindung,
- Figur 2: eine aktive Bremse,
- Figur 3: als Blockschaltbild dargestellte Einzelheiten der erfindungsgemäßen Bremseinrichtung,
- Figur 4: eine als Blockschaltbild dargestellte Einrichtung zur Bildung des Drehzahl-Sollwerts für die Bremseinrichtung,
- Figur 5: eine als Blockschaltbild dargestellte Einrichtung zur Bildung des Sollwerts für den Öffnungsquerschnitt des hydraulischen Ventils,
- Figur 6a: den Drehzahlverlauf beim Bremsen bis zum Stillstand,
- Figur 6b: den Druckverlauf beim Bremsen bis zum Stillstand,
- Figur 7: den Drehzahlverlauf bei Netzausfall mit Netzwiederkehr,
- Figur 8: den Drehzahlverlauf bei Netzausfall ohne Netzwiederkehr und
- Figur 9: eine hydraulische Sicherheitsschaltung für eine Notbremsung bei einer Störung der Bremseinrichtung.

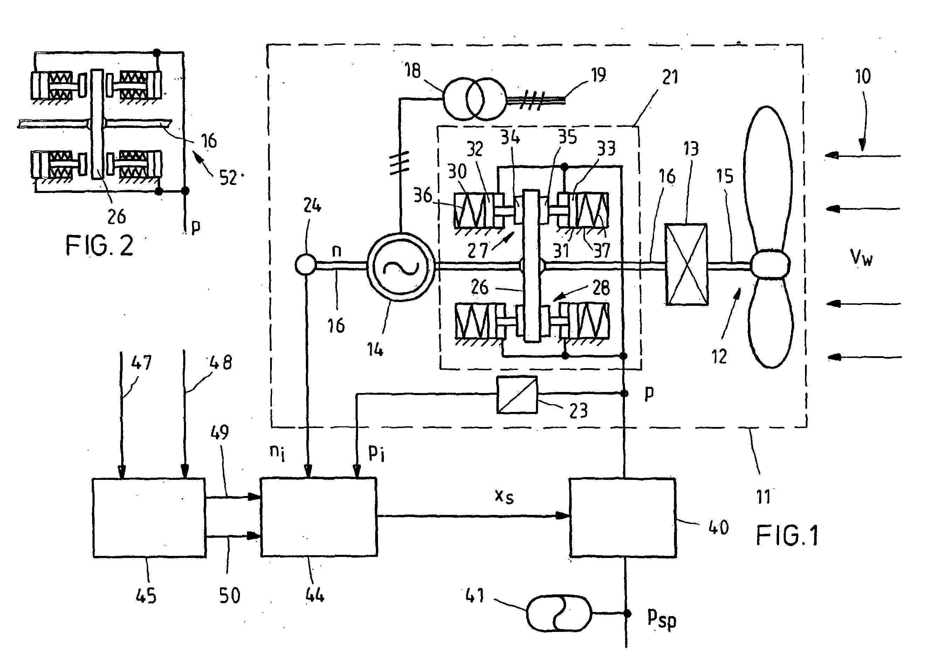

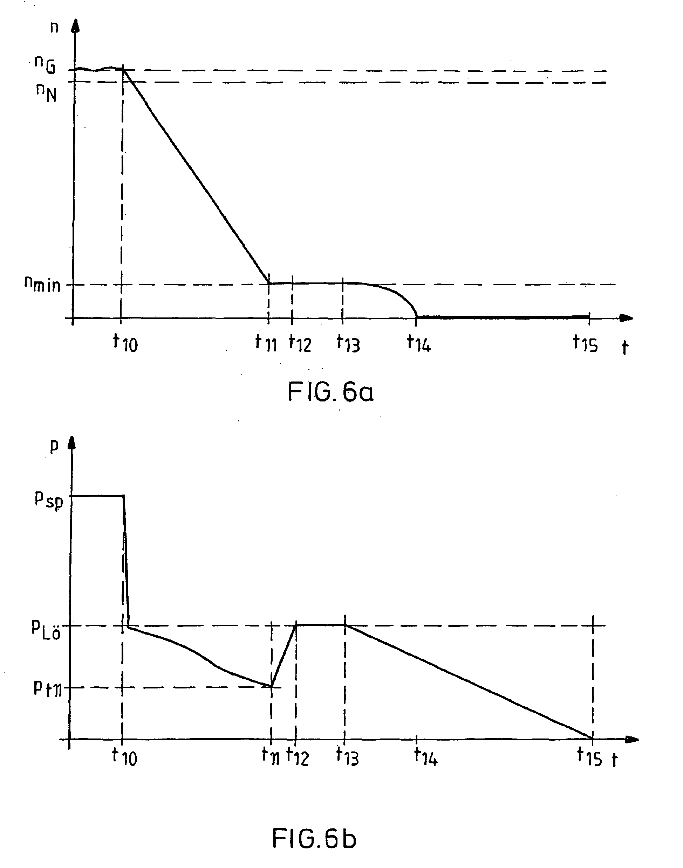

Die Figur 1 zeigt eine Windenergieanlage in schematischer Darstellung. Der die Windenergieanlage antreibende Wind ist durch Pfeile 10 dargestellt, seine Geschwindigkeit ist mit v_{W} bezeichnet.. Ein Block 11 formt die Windenergie in elektrische Energie um. Der Block 11 umfaßt einen Rotor 12, ein mechanisches Getriebe 13 und einen elektrischen Generator 14, die zusammen den Antriebsstrang der Windenergieanlage bilden. Der Rotor 12 ist über eine erste Welle 15 mit dem Eingang des Getriebes 13 verbunden. Der Ausgang des Getriebes 13 ist über eine zweite Welle 16 mit dem Generator 14 verbunden. Der Generator 14 ist über hier nicht im Einzelnen dargestellte Übertragungseinrichtungen 18 mit einem elektrischen Wechselstromnetz 19 gekoppelt. Der Generator 14 liefert Strom in das Netz 19, wenn seine Drehzahl n größer als eine der Frequenz f_{N} des Wechselstromnetzes 19 entsprechende Drehzahl n_{N} ist. In diesem Ausführungsbeispiel ist der Generator 14 so ausgelegt, daß eine Drehzahl von 1500 min⁻¹ einer Netzfrequenz f_{N} von 50 Hz entspricht. Das Getriebe 13 ist so ausgelegt, daß der Generator 14 sich im Normalbetrieb mit einer etwas höheren Drehzahl von ungefähr 1530 min⁻¹ dreht. Diese Drehzahl entspricht einem Schlupf in der Größenordnung von 2 % bezogen auf die der Netzfrequenz f_{N} entsprechende Drehzahl n_{N} des Generators 14. Ist der Generator 14 mit dem Netz 19 verbunden, stellt sich die Drehzahl n des Generators 14 im Normalbetrieb aufgrund der Rückwirkungen des Netzes 19 so ein, daß sie nur geringfügig um den oben als Beispiel angegebenen Wert von 1530 min⁻¹ schwankt. Die Drehzahlschwankungen im Normalbetrieb ergeben sich aus Änderungen der Windstärke. In den Figuren 6a, 7 und 8 sind die Drehzahlschwankungen qualitativ dargestellt. Das Getriebe 13 ist so ausgelegt, daß es die Drehzahl des Rotors 12 im Normalbetrieb auf die für den Betrieb des Generators 14 erforderliche Drehzahl erhöht. Der Block 11 umfaßt weiterhin eine hydraulisch betätigte, Bremse 21 sowie einen Druckgeber 23 und einen Drehzahlgeber 24.

Die Bremse 21 ist als passive Bremse ausgebildet. Sie weist eine Bremsscheibe 26 sowie zwei gleich aufgebaute Bremszangen 27 und 28 auf, die die Bremsscheibe 26 von zwei Seiten umgreifen. Die Bremsscheibe 26 ist an der das Getriebe 13 mit dem Generator 14 verbindenden Welle 16 gehalten, deren Drehzahl in diesem Ausführungsbeispiel größer als die Drehzahl der Welle 15 ist. Die Bremszangen 27 und 28 sind ortsfest angeordnet und um 180° gegeneinander versetzt. Auch bei mehr als zwei Bremszangen ist es vorteilhaft, sie ebenfalls gleichmäßig über dem Umfang der Bremsscheibe 26 zu verteilen. Die Bremszange 27 weist zwei hydraulische Zylinder 30 und 31 mit Kolben 32 bzw. 33 auf. Die Kolben 32 und 33 sind über nicht bezeichnete Kolbenstangen mit Bremsklötzen 34 bzw. 35 verbunden. Federn 36 und 37 drücken die Bremsklötze 34 bzw. 35 gegen die Bremsscheibe 26. Ein hydraulisches Stetigventil 40 steuert in Abhängigkeit von einem Steuersignal xₛ die Zu- bzw. Abfuhr von hydraulischem Druckmittel aus einem hydraulischen Drucknetz in die Kammern der Zylinder 30 und 31. Der Druck des Druckmittels, mit dem die Ringflächen der Kolben 32 und 33 beaufschlagt ist, ist mit p bezeichnet. Das hydraulische Drucknetz ist durch einen auf einen Druck pₛₚ aufgeladenen Speicher 41 dargestellt. Die Kraft, mit der der Bremsklotz 34 gegen die Scheibe 26 drückt, ist durch die Kraft der Feder 36 und durch die in entgegengesetzter Richtung wirkende Kraft, die sich aus dem Produkt der Ringfläche des Kolbens 32 und dem auf diese Fläche wirkenden Druck p des Druckmittels ergibt, bestimmt. Für die weitere Beschreibung wird anstelle der Kraft der Federn 36 und 37 ein dieser entsprechendes Druckäquivalent p_{F} eingeführt, dessen Größe der durch die Ringfläche der Kolben 32 bzw. 33 geteilten Federkraft entspricht. Die resultierende Bremskraft ist für p = 0 am größten. Für p > p_{F} überwiegt die von dem hydraulischen Druckmittel ausgeübte Kraft, die Bremse 21 ist völlig gelöst. Damit sich ein derartiger Druck einstellen kann, muß der Druck pₛₚ des Speichers 41 größer als p_{F} sein. Zwischenwerte der resultierenden Bremskraft erhält man, wenn der Druck p zwischen null und p_{F} liegt, wobei eine Verringerung des Drucks p eine Vergrößerung der Bremskraft bewirkt. Die Bremszange 28 ist in der gleichen Weise ausgebildet wie die Bremszange 27, auf eine gesonderte Beschreibung der Bremszange 28 wird daher verzichtet.

Der Druckgeber 23 formt den Druck p in ein Signal pᵢ um, das einer Regeleinrichtung 44 als Druck-Istwert zugeführt ist. Der Drehzahlgeber 24 formt die Drehzahl n in ein Signal nᵢ um, das der Regeleinrichtung 44 als Drehzahl-Istwert zugeführt ist. Der Regeleinrichtung 44 ist eine übergeordnete Maschinensteuerung 45 vorgeschaltet. Die Maschinensteuerung 45 entscheidet aufgrund von Signalen, die ihr über schematisch dargestellte Leitungen 47, 48 oder über einen Datenbus zugeführt sind, ob der Rotor 12 bis zum Stillstand abgebremst werden soll oder ob bei einem Ausfall des Netzes 19 die Drehzahl des Rotors 12 zunächst konstant gehalten werden soll. Soll ein Bremsvorgang eingeleitet werden, führt die Maschinensteuerung 45 der Regeleinrichtung 44 über eine Leitung 49 ein entsprechendes Signal zu. Soll die Drehzahl des Rotors 12 konstant gehalten werden, führt die Maschinensteuerung 45 der Regeleinrichtung 44 über die Leitung 50 ein entsprechendes Signal zu.

Die Figur 2 zeigt eine aktive Bremse 52. Sie weist grundsätzlich den gleichen Aufbau auf, wie die in der Figur 1 dargestellte passive Bremse 21. Im Gegensatz zu der passiven Bremse 21 sind die auf den Kolben wirkenden Federn so angeordnet, daß sie die Bremse lösen, wenn der Kolben des Zylinders nicht mit Druck beaufschlagt ist. Bei einem Druck von p < p_{F} überwiegt die Federkraft und die Bremsklötze sind von der Bremsscheibe 26 abgehoben. Bei p = p_{F} heben sich die auf den Kolben wirkenden Kräfte auf. Bei einem weiteren Anstieg des Drucks p steigt die Bremskraft in entsprechender Weise an.

In den Figuren 1 und 2 werden die Bremszangen 27 und 28 der Bremse 21 sowie die Bremszangen der Bremse 52 gleichzeitig mit demselben Druck p beaufschlagt. Abweichend hiervon ist es aber auch möglich, die Bremszangen der Bremsen 21 bzw. 52 alternierend mit Druck zu beaufschlagen, so daß die Bremsklötze der Bremszangen nur zeitweilig an der Bremsscheibe anliegen.

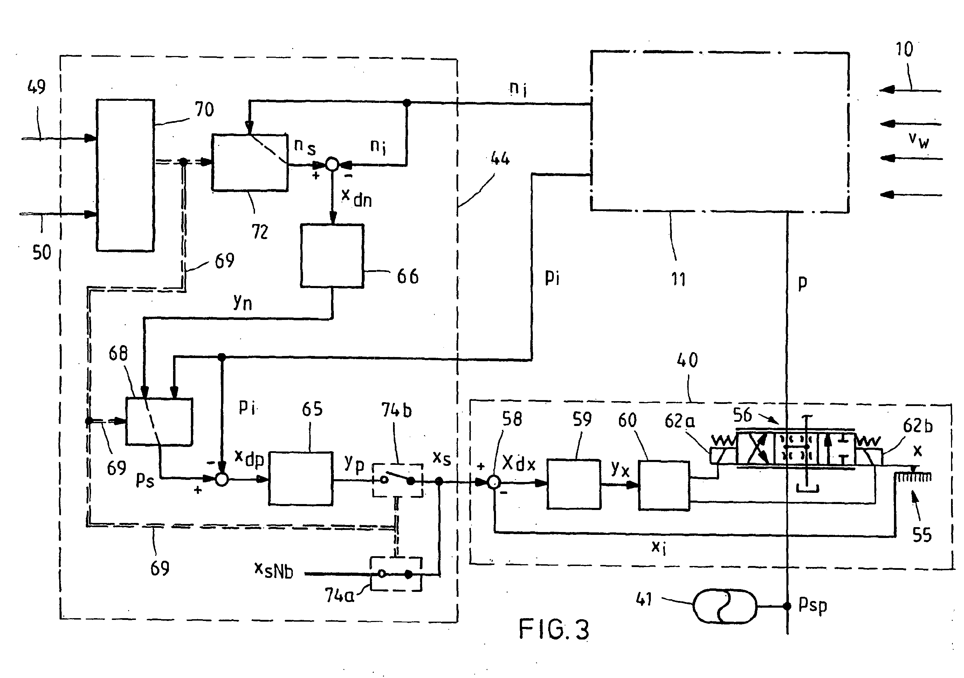

Die Figur 3 zeigt weitere Einzelheiten der in der Figur 1 schematisch dargestellten Windenergieanlage. Auf den schon anhand der Figur 1 beschriebenen Block 11 wirkt wieder der durch die Pfeile 10 dargestellte Wind ein. Das hydraulische Stetigventil 40 beaufschlagt den Block 11 mit Druckmittel, dessen Druck p durch das Steuersignal xₛ bestimmt ist. Ausgangssignale des Blocks 11 sind der Drehzahl-Istwert nᵢ und der Druck-Istwert pᵢ. Diese Signale sind der Regeleinrichtung 44 - wie schon in der Figur 1 dargestellt - als Eingangssignale zugeführt. Wie bereits beschrieben, dienen die Leitungen 49 und 50 dazu, der Regeleinrichtung 44 ein Steuersignal für die Einleitung eines Bremsvorgangs bzw. ein Steuersignal für das Konstanthalten der Drehzahl des Rotors 12 zuzuführen. Das Ventil 40 ist als elektrisch angesteuertes Proportionalventil mit Positionsrückführung ausgebildet. Ein Weggeber 55 formt die mit x bezeichnete Position des mit dem Bezugszeichen 56 versehenen Kolbens des Ventils 40 in einen Positions-Istwert xᵢ um. Ein Rechenglied 58 bildet aus dem als Positions-Sollwert dienenden Steuersignal xₛ und dem Positions-Istwert xᵢ eine Positions-Regeldifferenz x_{dx}, die einem Positions-Regler 59 als Eingangsgröße zugeführt ist. Der Positions-Regler 59 bildet aus der Positions-Regeldifferenz x_{dx} eine Stellgröße yₓ. Eine Schaltungsanordnung 60 formt die Stellgröße yₓ in für die Ansteuerung der mit den Bezugszeichen 62a und 62b versehenen Magnetspulen geeignete Steuersignale um. Der hier beschriebene Positions-Regelkreis führt die Position x des Kolbens 56 dem Steuersignal xₛ nach.

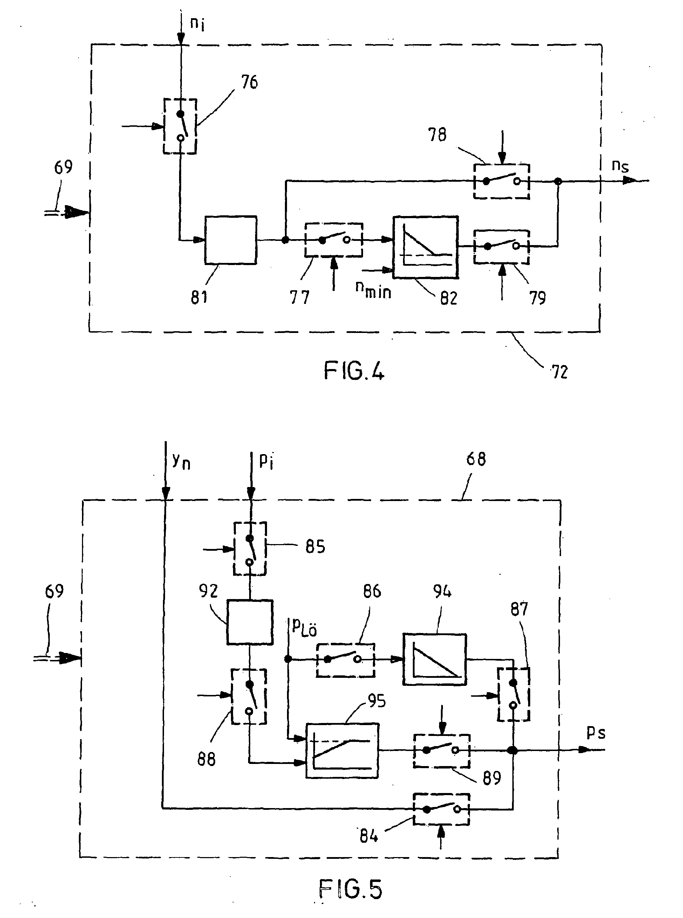

Die Regeleinrichtung 44 weist einen Druck-Regler 65 und einen Drehzahl-Regler 66 auf. Der Druck-Regler 65 ist Bestandteil eines Druck-Regelkreises mit dem Druck-Istwert pᵢ, dem Druck-Sollwert pₛ und der Druck-Stellgröße yₚ. Dem Eingang des Druck-Reglers 65 ist die aus dem Druck-Istwert pi und dem Druck-Sollwert pₛ gebildete Druck-Regeldifferenz x_{dp} zugeführt. Ein erster Sollwertbildner 68 liefert den Druck-Sollwert pₛ. Dem Sollwertbildner 68 sind der Druck-Istwert pᵢ, das mit yₙ bezeichnete Ausgangssignal des Drehzahl-Reglers 66 und über schematisch dargestellte Leitungen 69 Ausgangssignale einer Steuerschaltung 70 zugeführt. Einzelheiten des Sollwertbildners 68 sind weiter unten anhand der Figur 5 beschrieben. Der Drehzahl-Regler 66 ist Bestandteil eines Drehzahl-Regelkreises mit dem Drehzahl-Istwert nᵢ, dem Drehzahl-Sollwert nₛ und der Drehzahl-Stellgröße yₙ. Dem Eingang des Drehzahl-Reglers 66 ist die aus dem Drehzahl-Istwert nᵢ und dem Drehzahl-Sollwert nₛ gebildete Drehzahl-Regeldifferenz x_{dn} zugeführt. Ein zweiter Sollwertbildner 72 liefert den Drehzahl-Sollwert nₛ. Dem Sollwertbildner 72 sind der Drehzahl-Istwert nᵢ und über die schematisch dargestellten Leitungen 69 Ausgangssignale der Steuerschaltung 70 zugeführt. Einzelheiten des Söllwertbildners 72 sind weiter unten anhand der Figur 4 beschrieben.

Die Steuerschaltung 70 verarbeitet die über die Leitungen 49 (für "Abbremsen bis zum Stillstand") und 50 (für "Drehzahl konstant halten") zugeführten Signale zu Steuersignalen, die über die Leitungen 69 den Sollwertbildnern 68 und 72 sowie zwei gegenläufig betätigten Schaltern 74a und 74b zugeführt sind. Dem Ventil 40 ist über einen der von der Steuerschaltung 70 betätigten Schalter 74a und 74b entweder ein konstantes Signal x_{sNb} (74a geschlossen, 74b geöffnet) oder das Ausgangssignal yₚ des Druck-Reglers 65 (74a geöffnet, 74b geschlossen) zugeführt.

Die Figur 4 zeigt Einzelheiten einer Ausgestaltung des den Drehzahl-Sollwert nₛ bildenden Sollwertbildners 72 in einer seine Funktion verdeutlichenden prinzipiellen Darstellung. Der Sollwertbildner 72 besitzt vier Schalter 76 bis 79, einen Speicher 81 und einen Rampenbildner 82. Die Schalter 76 bis 79 sind durch Steuersignale der Steuerschaltung 70, die den durch Pfeile dargestellten Steuereingängen der Schalter über die Leitungen 69 zugeführt sind, gesteuert.

Die Figur 5 zeigt Einzelheiten einer Ausgestaltung des den Druck-Sollwert pₛ bildenden Sollwertbildners 68 in einer seine Funktion verdeutlichenden prinzipiellen Darstellung. Der Sollwertbildner 68 besitzt sechs Schalter 84 bis 89, einen Speicher 92 sowie zwei Rampenbildner 94 und 95. Die Schalter 84 bis 89 sind durch Steuersignale der Steuerschaltung 70, die den durch Pfeile dargestellten Steuereingängen der Schalter über die Leitungen 69 zugeführt sind, gesteuert.

Im Normalbetrieb der Windenergieanlage befinden sich die Schalter 74a und 74b in der in der Figur 3 dargestellten Stellung, dem Ventil 40 ist das Signal x_{sNb} zugeführt. Dieses Signal ist so groß gewählt, daß der Positions-Regler 59 den Kolben 56 in eine Lage fährt, in der der Bremse 21 der Druck pₛₚ des Speichers 41 zugeführt ist. Bei einer derartigen Ansteuerung des Ventils 40 stellt sich der Druck p auf den Druck pₛₚ des Speichers 41 ein, der - wie bereits ausgeführt - größer als der Druck p_{F} ist. Durch diese Maßnahme ist sichergestellt, daß die Bremse 21 im Normalbetrieb vollständig gelöst ist. In diesem Betriebszustand ist der Druck-Regelkreis nicht geschlossen. Es erfolgt stattdessen eine Steuerung der Position x des Kolbens 56 des Ventils 40 durch das Signal x_{sNb}.

Außerdem ist im Normalbetrieb der Windenergieanlage der Schalter 76 des Sollwertbildners 72 geschlossen und die Schalter 77 bis 79 sind geöffnet. Das bedeutet, daß dem Speicher 81 jeweils der aktuelle Drehzahl-Istwert nᵢ zugeführt ist. Soll bei einem Ausfall des Netzes 19 die Drehzahl n konstant gehalten werden, öffnet die Steuerschaltung 70 den Schalter 76 und schließt den Schalter 78. Damit dient der letzte Drehzahl-Istwert vor dem Ausfall des Netzes 19 als Drehzahl-Sollwert nₛ für den Drehzahl-Regelkreis. Der Sollwertbildner 68 führt bei geschlossenen Schaltern 84 und 85 sowie geöffneten Schaltern 87 bis 89 dem Druck-Regelkreis das von dem Drehzahl-Regler 66 gebildete Stellsignal yₙ als Druck-Sollwert pₛ zu. Der Schalter 74b ist geschlossen und der Schalter 74a ist geöffnet. In dieser Schalterstellung ist das Stellsignal yₚ des Druck-Reglers 65 dem Ventil 40 als Positions-Sollwert xₛ zugeführt. Für die Drehzahl-Regelung während eines Ausfall des Netzes 19 sind der Drehzahl-Regelkreis, der diesem unterlagerte Druck-Regelkreis und der dem Druck-Regelkreis unterlagerte Positions-Regelkreis geschlossen. Durch Öffnen des Schalters 84 des Sollwertbildners 68 wird die Regeleinrichtung 44 von Drehzahl-Regelung auf Druck-Regelung umgeschaltet. Bei einer reinen Druck-Regelung ist der Druck-Sollwert pₛ unabhängig von dem Ausgangssignal yₙ des Drehzahl-Reglers 66.

Die Figuren 6a und 6b zeigen den zeitlichen Verlauf der Drehzahl n bzw. des Drucks p beim kontrollierten Abbremsen des Rotors 12 aus einer Betriebsdrehzahl n_{G} bis zum Stillstand. Bis zum Zeitpunkt t₁₀ befindet sich die Windenergieanlage im Normalbetrieb und die Drehzahl n schwankt geringfügig um einen Wert n_{G}, der - wie oben ausgeführt - etwas größer als die der Netzfrequenz f_{N} entsprechende Drehzahl n_{N} ist. Der Druck p hat sich - wie ebenfalls oben ausgeführt - auf den Druck pₛₚ des Speichers 41 eingestellt, d. h. die Bremse 21 ist gelöst. Für die folgenden Erläuterungen wird davon ausgegangen, daß die Maschinensteuerung 45 im Zeitpunkt t₁₀ der Regeleinrichtung 44 über die Leitung 49 ein Signal für die Einleitung eines Bremsvorgangs zuführt. Die Steuerschaltung 70 führt den Sollwertbildnern 68 und 72 sowie den Schaltern 74a und 74b Steuersignale zu, die die Regeleinrichtung 44 bis zum Zeitpunkt t₁₁ auf Drehzahl-Regelung schalten. Die Steuerschaltung 70 öffnet im Zeitpunkt t₁₀ den Schalter 76 und schließt die Schalter 77 und 79. Der Schalter 78 bleibt geöffnet. Der Rampenbildner 82 liefert ein Ausgangssignal, das im Zeitpunkt t₁₀ mit dem in dem Speicher 81 enthaltenen Drehzahl-Istwert nₜ₁₀ beginnt und nach einer Rampenfunktion bis auf einen unteren Wert nₘᵢₙ abfällt. Die Drehzahl nₘᵢₙ ist so gewählt, daß sie in der Größenordnung von 10 % von n_{N} liegt. Der Zeitpunkt, in dem das Ausgangssignal des Rampenbildners 82 nₘᵢₙ erreicht hat, ist mit t₁₁ bezeichnet. In dem Zeitraum von t₁₀ bis t₁₁ ist das Ausgangssignal des Sollwertbildners 72 dem Drehzahl-Regelkreis als Drehzahl-Sollwert nₛ zugeführt..Mit dem Schließen des Druck-Regelkreises im Zeitpunkt t₁₀ ändert sich der Druck p von dem Wert pₛₚ auf einen Wert p_{Lö}, der geringfügig über dem Wert von p_{F} liegt. Der Wert p_{Lö} ist so gewählt, daß die Bremse 21 sicher gelöst ist. Während der Drehzahl-Regelung sinkt der Druck p von p_{Lö} bis auf einen mit pₜ₁₁ bezeichneten Wert, der im Zeitpunkt t₁₁ herrscht. Dieser Druckverlauf ist in der Figur 6b zwischen den Zeitpunkten t₁₀ und t₁₁ qualitativ dargestellt. Im Zeitpunkt t₁₁ schaltet die Steuerschaltung 70 den Sollwertbildner 68 der Regeleinrichtung 44 von Drehzahl-Regelung auf Druck-Regelung um. Hierzu öffnet die Steuerschaltung 70 die Schalter 84 und 85, der Schalter 74b bleibt geschlossen. Die Schalter 86 und 87 sind geöffnet. In dem Speicher 92 ist jetzt der Wert pₜ₁₁ des Drucks gespeichert, der sich im Zeitpunkt t₁₁ eingestellt hat. Die Steuerschaltung 70 schließt die Schalter 88 und 89. Wie in der Figur 6b dargestellt ist, steigt das Ausgangssignal des Rampenbildners 95 von pₜ₁₁ auf p_{Lö} an. Der Zeitpunkt, zu dem das Ausgangssignal des Rampenbildners 95 den Wert p_{Lö} erreicht, ist mit t₁₂ bezeichnet. In dem Zeitraum zwischen t₁₁ und t₁₂ ist der Drehzahl-Regelkreis geöffnet. Obwohl sich die Bremskraft aufgrund des Druckanstiegs zwischen den Zeitpunkten t₁₁ bis t₁₂ verringert, bleibt die Drehzahl n in diesem Zeitraum praktisch gleich nₘᵢₙ. Während des bis jetzt beschriebenen Teil des Bremsvorgangs hat sich das zwischen dem Rotor 12 und der Bremse 21 angeordnete Getriebe 13 mechanisch verspannt. Bis zum Zeitpunkt t₁₃ regelt der Druck-Regler 65 den Druck.p so, daß er weiterhin gleich p_{Lö} ist. Das bedeutet, daß die Bremse 21 zwischen den Zeitpunkten t₁₂ und t₁₃ ganz gelöst ist. Während dieser Zeit entspannt sich der aus dem Rotor 12, der Welle 15, dem Getriebe 13, der Welle 16, der Bremsscheibe 26 und dem Generator 14 gebildete Antriebsstrang. Die Dauer des Freilauf-Zeitraums zwischen t₁₂ und t₁₃ ist so gewählt, daß sich das Getriebe 13 auch unter ungünstigen Bedingungen entspannt hat. Wie entsprechende Messungen gezeigt haben, behält die Drehzahl n auch in diesem Zeitraum praktisch den Wert nₘᵢₙ bei. Im Zeitpunkt t₁₃ öffnet die Steuerschaltung 70 den Schalter 89 und schließt die Schalter 86 und 87. Das Ausgangssignal des Rampenbildners 94 sinkt jetzt nach einer Rampenfunktion von p_{Lö} bis auf Null ab. Dieses Signal ist dem Druck-Regler 65 in dem Zeitraum zwischen t₁₃ und t₁₅ als Druck-Sollwert pₛ zugeführt. Wie die Figur 6a zeigt, bleibt die Drehzahl n zunächst konstant, sinkt dann aber immer stärker ab, bis der Rotor 12 bereits im Zeitpunkt t₁₄ zum Stillstand gekommen ist. Die Druckregelung verringert den Druck-Sollwert pₛ noch so lange, bis er im Zeitpunkt t₁₅ ebenfalls zu Null geworden ist. Damit ist der Bremsvorgang abgeschlossen. Der Bremsvorgang erfolgt in einem ersten Abschnitt, der sich von t₁₀ bis t₁₁ erstreckt, drehzahlgeregelt nach einer ersten Rampe von nₜ₁₀ bis nₘᵢₙ. Der weitere Bremsvorgang erfolgt in drei weiteren Abschnitten druckgeregelt, wobei der Drucksollwert pₛ in dem zweiten Abschnitt (t₁₁ bis t₁₂) nach einer zweiten Rampe von pₜ₁₁ auf p_{Lö} ansteigt, während des dritten Abschnitts (t₁₂ bis t₁₃) konstant auf dem Wert p_{Lö} gehalten ist und während des vierten Abschnitts (t₁₃ bis t₁₅) nach einer dritten Rampe von p_{Lö} bis auf Null abfällt. Die Dauer des Bremsvorgangs bis zum Stillstand des Rotors 12 lag bei einer ausgeführten Bremseinrichtung nach der Erfindung in der Größenordnung von 12 Sekunden. Hiervon entfielen sechs Sekunden auf den Zeitraum von t₁₀ bis t₁₁, eine Sekunde auf den Zeitraum von t₁₁ bis t₁₂, zwei Sekunden auf den Zeitraum von t₁₂ bis t₁₃ und vier Sekunden auf den Zeitraum von t₁₃ bis t₁₄.

Alternativ hierzu ist es auch möglich, den Rotor 12 ab dem Zeitpunkt t₁₃ drehzahlgeregelt von der Drehzahl nₘᵢₙ bis zum Stillstand nach einer Drehzahlrampe herunterzufahren. Hierfür ist es jedoch erforderlich, einen Drehzahlsensor zu verwenden, der auch kleine Drehzahlen ausreichend genau erfaßt.

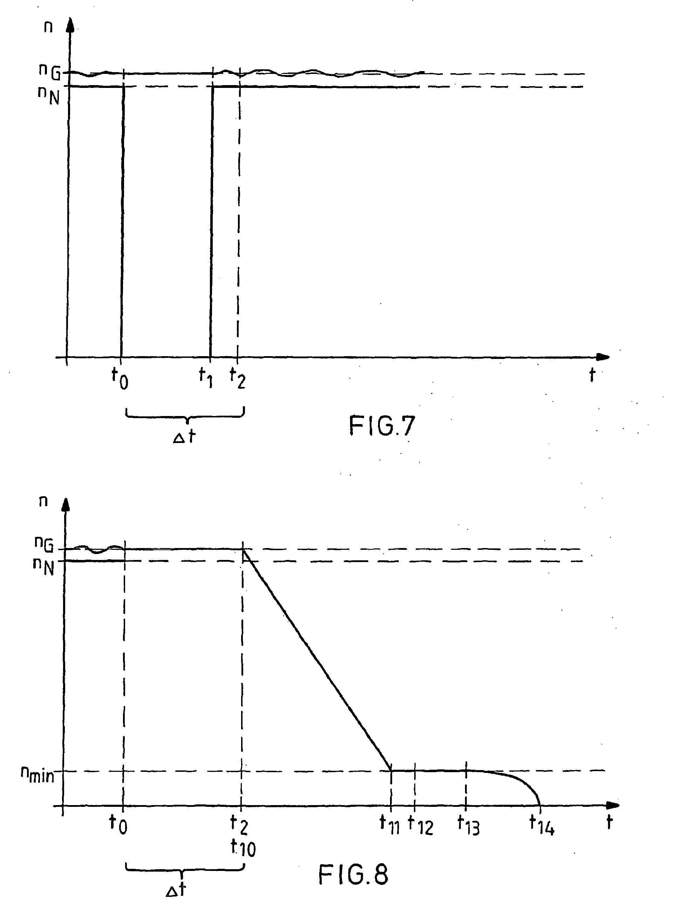

Die Figur 7 zeigt den zeitlichen Verlauf der Drehzahl n bei einem kurzzeitigen Netzausfall, d. h. bei einem Netzausfall mit Netzwiederkehr innerhalb eines von dem Betreiber des aufnehmenden Netzes vorgegebenen Zeitraums, der im Folgenden mit Δt bezeichnet ist. Dieser Zeitraum ist in der Figur 7 durch den Abstand zwischen den Zeitpunkten t₀ und t₂ dargestellt. Bis zum Zeitpunkt t₀ befindet sich die Windenergieanlage im Normalbetrieb. Im Zeitpunkt t₀ fällt das Netz 19 aus und die Maschinensteuerung 45 führt der Regeleinrichtung 44 über die Leitung 50 ein Signal für die Einleitung der Regelung der Drehzahl auf einen konstanten Wert zu. Die Steuerschaltung 70 führt den Sollwertbildnern 68 und 72 sowie den Schaltern 74a und 74b Steuersignale zu, die die Regeleinrichtung 44 auf Drehzahl-Regelung schalten. Da die Drehzahl auf dem Wert nₜ₁₀, der sich im Umschaltzeitpunkt eingestellt hatte, konstant gehalten werden soll, öffnet die Steuerschaltung 70 im Zeitpunkt t₁₀ den Schalter 76 und schließt den Schalter 78. Damit ist dem Drehzahl-Regler 66 der Wert nₜ₁₀ als Drehzahl-Sollwert nₛ zugeführt. Außerdem schließt die Steuerschaltung 70 den Schalter 84 und öffnet die Schalter 87 sowie 89. Damit ist dem Druck-Regler 65 das Ausgangssignal yₙ als Druck-Sollwert pₛ zugeführt. Dies bedeutet, daß sowohl der Drehzahl-Regelkreis als auch der diesem unterlagerte Druck-Regelkreis mit dem dem Druck-Regelkreis unterlagerten Positions-Regelkreis geschlossen sind. Es wird weiterhin davon ausgegangen, daß das Netz 19 im Zeitpunkt t₁, also vor Ablauf des von dem Betreiber des aufnehmenden Netzes vorgegebenen Zeitraums Δt wiederkehrt. Mit der Wiederkehr des Netzes 19 führt die Maschinensteuerung 45 der Regeleinrichtung 44 über die Leitung 50 ein entsprechendes Signal zu. Daraufhin öffnet die Steuerschaltung 70 den Schalter 74b und schließt den Schalter 74a. Außerdem schaltet sie die Schalter der Sollwertbildner 68 und 72 in die Stellung für Normalbetrieb.

Die Figur 8 zeigt den zeitlichen Verlauf der Drehzahl n bei einem länger andauernden Netzausfall, d. h. bei einem Netzausfall, bei dem das Netz nach Ablauf des Zeitraums Δt noch nicht wiedergekehrt ist. Wie im Zusammenhang mit der Figur 7 beschrieben, befindet sich die Windenergieanlage bis zum Zeitpunkt t₀ im Normalbetrieb. Im Zeitpunkt t₀ fällt das Netz 19 aus und die Maschinensteuerung 45 führt der Regeleinrichtung 44 über die Leitung 50 ein Signal für die Einleitung der Regelung der Drehzahl auf einen konstanten Wert zu. Wie im Zusammenhang mit der Figur 7 beschrieben, hält die Regeleinrichtung 44 die Drehzahl n bis zum Zeitpunkt t₂ konstant. Da im Zeitpunkt t₂ das Netz 19 noch nicht wiedergekehrt ist, führt die Maschinensteuerung 45 der Regeleinrichtung 44 über die Leitung 49 ein Signal für die Einleitung des Bremsvorgangs zu. Der Bremsvorgang läuft wie anhand der Figuren 6a und 6b beschrieben ab, wobei der Zeitpunkt t₂ gleich dem Zeitpunkt t₁₀ des Bremsvorgangs ist.

Die Regeleinrichtung 44 ist in vorteilhafter Weise als digitale Reglerbaugruppe ausgebildet, wie sie z. B. von der Bosch Rexroth AG unter Bezeichnung "HNC 100" hergestellt wird. Einzelheiten einer derartigen Baugruppe sind in der Druckschrift "RD 30 131-P/03/01" der Bosch Rexroth AG beschrieben.

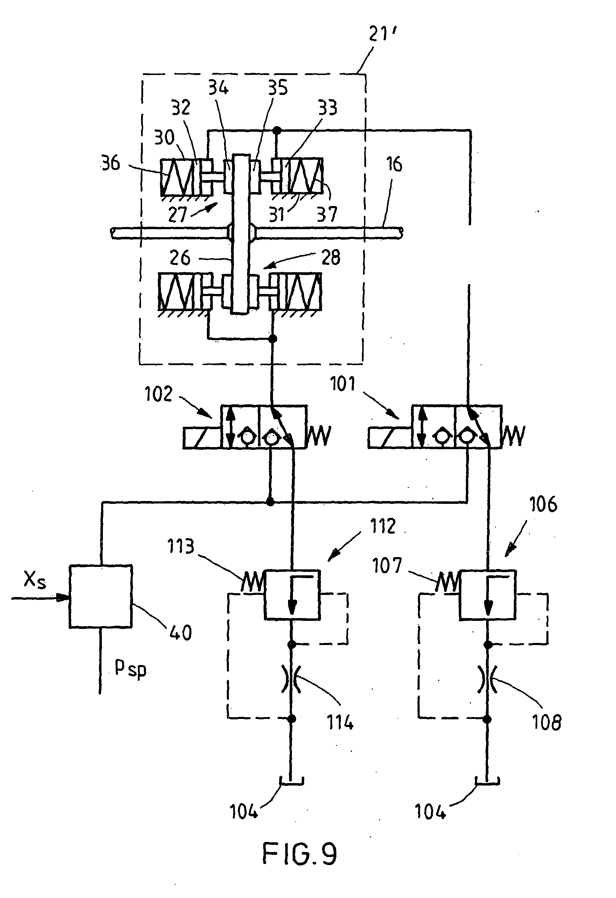

Die Figur 9 zeigt eine zusätzlich zu der oben beschriebenen elektrisch gesteuerten Bremseinrichtung vorgesehene hydraulische Sicherheitsschaltung für eine Notbremsung im Fall einer Störung der elektrisch gesteuerten Bremseinrichtung. In der Figur 9 sind eine passive Bremse 21' und das Ventil 40 dargestellt. Die Bremse 21' unterscheidet sich von der in der Figur 1 dargestellten Bremse 21 dadurch, daß die Bremszangen 27 und 28 über je ein Schaltventil 101 bzw. 102 mit dem Ausgang des die Druckmittelzufuhr zu der Bremse 21' steuernden Ventils 40 verbunden sind, wenn sich die Schaltventile 101 und 102 in ihrer Arbeitsstellung befinden. In ihrer Ruhestellung verbinden die Schaltventile 101 und 102 die Bremszangen 27 bzw. 28 mit einem Tank. Zwischen dem Schaltventil 101 und dem Tank 104 sind eine Ablaufdruckwaage 106, im Folgenden kurz als Druckwaage bezeichnet, mit einer Feder 107 und eine Meßblende 108 angeordnet. Die Druckwaage 106 ist im Ruhezustand durch die Kraft der Feder 107 geöffnet. Die Druckwaage 106 steuert die über die Meßblende 108 fließende Druckmittelmenge so, daß sich ein konstanter Druckabfall über der Meßblende 108 einstellt, dessen Größe durch das Druckäquivalent der Feder 107 bestimmt ist. Hierdurch ist sichergestellt, daß in der Ruhestellung des Schaltventils 101 ein konstanter Druckmittelstrom aus den Zylindern 30 und 31 fließt, der unabhängig von der Viskosität des Druckmittels ist. Das bedeutet, daß sich bei einer von einem störungsbedingten Umschalten des Schaltventils 101 von der Arbeitsstellung in die Ruhestellung ausgelösten Notbremsung die Kolben 32 und 33 praktisch unabhängig von der Viskosität des Druckmittels mit einer vorgebbaren Geschwindigkeit auf die Bremsscheibe 26 zubewegen. Damit wird verhindert, daß die Bremsklötze 34 und 35 bei einer Notbremsung in Abhängigkeit von der jeweiligen Viskosität unterschiedlich hart auf der Bremsscheibe 26 auftreffen. Zwischen dem Schaltventil 102 und dem Tank 104 sind eine weitere Ablaufdruckwaage 112, im Folgenden ebenfalls kurz als Druckwaage bezeichnet, mit einer Feder 113 und eine weitere Meßblende 114 angeordnet, die in der gleichen Weise arbeiten wie die Druckwaage 106 und die Meßblende 108.

Der Notbremsvorgang ist somit unabhängig von der Viskosität des Druckmittels, mit dem die Zylinder der Bremse 21' beaufschlagt sind. Da Windenergieanlagen großen Temperaturschwankungen ausgesetzt sind, die die Viskosität des Druckmittels in starkem Maße beeinflussen, ist ein von der Viskosität des Druckmittels unabhängiger Notbremsvorgang bei einer derartigen Anlage von wesentlicher Bedeutung.

Die Schaltventile 101 und 102 erleichtern außerdem ein Auswechseln der Bremsklötze 34, 35. Hierzu wird jeweils das Schaltventil einer Bremszange in die Ruhestellung geschaltet und die andere Bremszange derart mit Druck beaufschlagt, daß die Bremsklötze von der Bremsscheibe 26 abheben. Damit wirkt die druckentlastete Bremszange als Feststellbremse, die während des Wechseln der Bremsklötze der jeweils anderen Bremszange eine Drehbewegung des Antriebsstrangs verhindert.

## Patentansprüche

1. Bremseinrichtung für eine Windenergieanlage mit einem die Windenergie in eine Drehbewegung umsetzenden Rotor, der über ein Getriebe einen elektrischen Generator antreibt, dessen erzeugte elektrische Energie in ein elektrisches. Netz einspeisbar ist,
- mit einer hydraulisch betätigten Bremse für den Rotor,
- mit einem die Druckmittelzufuhr zu der Bremse steuernden hydraulischen Ventil und
- mit einer Regeleinrichtung, die ein Steuersignal für das hydraulische Ventil erzeugt,
**dadurch gekennzeichnet,**
- **daß** die Regeleinrichtung (44) einen Druck-Regelkreis für den Druck (p) des der Bremse (21) zugeführten Druckmittels aufweist, und einen Druck-Regler (65) aufweist
- **daß** dem Druck-Regelkreis.das Ausgangssignal eines von dem Druck (p) beaufschlagten Drucksensors (23) als Druck-Istwert (pᵢ) zugeführt ist und
- **daß** der Druck-Regler (65) aus der Abweichung (x_{dp}) des Druck-Istwerts (pᵢ) von einem Druck-Sollwert (pₛ) das Steuersignal (yₚ) für das hydraulische Ventil (40) bildet.

2. Bremseinrichtung nach Anspruch 1, **dadurch gekennzeichnet, daß** das die Druckmittelzufuhr zu der Bremse. (21) steuernde hydraulische Ventil (40) ein hydraulisches Stetigventil ist.

3. Bremseinrichtung nach Anspruch 2, **dadurch gekennzeichnet, daß** das hydraulische Ventil (40) ein Proportionalventil ist.

4. Bremseinrichtung nach Anspruch 3, **dadurch gekennzeichnet, daß** das Proportionalventil mit einer Positionsrückführung (55) versehen ist und daß die Positionsrückführung (55) Bestandteil eines dem Druck-Regelkreis unterlagerten Positions-Regelkreises ist.

5. Bremseinrichtung nach einem der vorhergehenden Ansprüche , **dadurch gekennzeichnet, daß** die Bremse (21) zwischen dem Getriebe (13) und dem Generator (14) angeordnet ist.

6. Bremseinrichtung nach nach einem der vorhergehenden Ansprüche, **dadurch gekennzeichnet, daß** die Bremse (21; 21'; 52) eine Bremszange (27, 28) aufweist, die von zwei Seiten an einer Bremsscheibe (26) angreift.

7. Bremseinrichtung nach Anspruch 6, **dadurch gekennzeichnet, daß** mehrere, auf dem Umfang der Bremsscheibe (26) verteilte Bremszangen (27, 28) an der Bremsscheibe (26) angreifen.

8. Bremseinrichtung nach Anspruch 9, **dadurch gekennzeichnet, daß** die Bremszangen (27, 28) alternierend an der Bremsscheibe (26) angreifen.

9. Bremseinrichtung nach einem der Ansprüche 6 bis 8, **dadurch gekennzeichnet, daß** die Bremse als passive Bremse (21; 21') ausgebildet ist.

10. Bremseinrichtung nach einem der Ansprüche 6 bis 8, **dadurch gekennzeichnet, daß** die Bremse als aktive Bremse (52) ausgebildet ist.

11. Bremseinrichtung nach Anspruch 9, **dadurch gekennzeichnet, daß** zwischen dem die Druckmittelzufuhr zu der Bremse (21') steuernden Ventil (40) und jeder Bremszange (27, 28) ein Schaltventil (101 bzw. 102) angeordnet ist, das in seiner Arbeitsstellung die Zylinder (30, 31) einer Bremszange (27) mit dem die Druckmittelmenge steuernden Ventil (40) verbindet und das in seiner Ruhestellung die Zylinder (30, 31) der Bremszangen (27, 28) mit einem Tank (104) verbindet, und daß zwischen jedem Schaltventil (101, 102) und dem Tank (104) eine Druckwaage (106 bzw. 112) angeordnet ist, die zusammen mit einer Meßblende (108 bzw. 114) die in der Ruhestellung der Schaltventile (101, 102) zum Tank (104) abfließende Druckmittelmenge konstant hält.

12. Bremseinrichtung nach einem der vorhergehenden Ansprüche, **dadurch gekennzeichnet, daß** die Regeleinrichtung (44) zwischen Drehzahlregelung und Druckregelung umschaltbar ist, wobei bei Drehzahlregelung das Ausgangssignal (yₙ) des Drehzahl-Reglers (66) dem Druck-Regler (65) als Druck-Sollwert (pₛ) zugeführt ist und bei Druckregelung der Druck-Sollwert (pₛ) unabhängig von dem Ausgangssignal (yₙ) des Drehzahl-Reglers (66) ist.

13. Verfahren zum Betrieb einer Bremseinrichtung nach. Anspruch 12, **dadurch gekennzeichnet,**
- **daß** zum kontrollierten Abbremsen des Rotors (12) aus einer Betriebsdrehzahl die Regeleinrichtung (44) zunächst als Drehzahlregelung betrieben wird, wobei der Drehzahl-Sollwert (nₛ) ausgehend von dem Drehzahl-Istwert (nₜ₁₀) zu Beginn (t₁₀) des Bremsvorgangs nach einer ersten Rampenfunktion bis auf einen vorgebbaren Mindestwert (nₘᵢₙ) verringert wird,
- **daß** die Regeleinrichtung (44) beim Erreichen des Mindestwerts (nₘᵢₙ) von Drehzahlregelung auf Druckregelung umgeschaltet wird, wobei der Druck-Sollwert (pₛ) ausgehend von dem Druck-Istwert (pₜ₁₁) im Umschaltzeitpunkt (t₁₁) nach einer zweiten Rampenfunktion auf einen Wert (p_{Lö}) verändert wird, der einem völligen Lösen der Bremse (21) entspricht,
- **daß** die Regeleinrichtung (44) den dem völligen Lösen der Bremse (21) entsprechenden Wert (p_{Lö}) während eines Freilauf-Zeitraums (t₁₂ bis t₁₃) aufrechterhält, dessen Länge so bemessen ist, daß sich der im wesentlichen aus Generator (14), Bremsscheibe (26), Getriebe (13) und Rotor (12) gebildete Antriebsstrang entspannt hat, und
- **daß** der Rotor (12) daran anschließend bis zum Stillstand abgebremst wird.

14. Verfahren nach Anspruch 13, **dadurch gekennzeichnet, daß** der Rotor (12) nach dem Ablauf des Freilauf-Zeitraums (t₁₂ bis t₁₃) ausgehend von der zu diesem Zeitpunkt (t₁₃) erreichten Drehzahl drehzahlgeregelt nach einer dritten Rampenfunktion bis zum Stillstand abgebremst wird.

15. Verfahren nach Anspruch 13, **dadurch gekennzeichnet, daß** der Rotor (12) nach dem Ablauf des Freilauf-Zeitraums (t₁₂ bis t₁₃) nach einer vierten Rampenfunktion druckgeregelt bis zum Stillstand abgebremst wird.

16. Verfahren zum Betrieb einer Bremseinrichtung nach Anspruch 12, **dadurch gekennzeichnet,**
- **daß** bei einer kurzzeitigen Störung des elektrischen Netzes (19) die Regeleinrichtung (44) als Drehzahlregelung betrieben wird, wobei dem Drehzahl-Regler (66) der Drehzahl-Istwert (nₜ₀) zu Beginn (t₀) der Störung als Drehzahl-Sollwert (nₛ) zugeführt wird,
- **daß** bei einer Beendigung der Störung innerhalb eines vorgebbaren Zeitraums (Δt) der Druck-Regelkreis des hydraulischen Ventils (40) geöffnet wird und das hydraulische Ventil (40) mit einem konstanten Signal (x_{sNb}) beaufschlagt wird, das zu einem völligen Lösen der Bremse (21) führt, und
- **daß** der Rotor (12), wenn die Störung innerhalb des vorgebbaren Zeitraums (Δt) noch nicht beendet ist, von der Regeleinrichtung (44) kontrolliert bis zum Stillstand abgebremst wird.

17. Verfahren nach Anspruch 16, **dadurch gekennzeichnet, daß** das kontrollierte Abbremsen entsprechend einem der Ansprüche 12 bis 14 erfolgt.

18. Verfahren nach einem der Ansprüche 13 bis 17, **dadurch gekennzeichnet, daß** im Normalbetrieb der Druck-Regelkreis geöffnet wird und das hydraulische Ventil (40) mit einem konstanten Signal (x_{sNb}) beaufschlagt wird, das zu einem völligen Lösen der Bremse (21) führt.

## Claims

1. A brake device for a wind turbine with a rotor which transforms the wind energy into a rotary motion and drives, via a gearbox, an electrical generator, the generated electrical power of which can be fed into an electricity grid,
- having a hydraulically operated brake for the rotor,
- having a hydraulic valve controlling the supply of pressure medium to the brake, and
- having a control device which generates a control signal for the hydraulic valve,
**characterized by the fact that**
- the control device (44) has a pressure control loop for the pressure (p) of the pressure medium supplied to the brake (21), and a pressure controller (65),
- the output signal of a pressure sensor (23) acted upon by the pressure (p) is fed to pressure control circuit as a pressure actual value (pᵢ), and
- the pressure controller (65) generates the control signal (yₚ) for the hydraulic valve (40) from the deviation (x_{dp}) of the pressure actual value (pᵢ) from a pressure set value (pₛ).

2. A brake device according to claim 1, **characterized by the fact that** the hydraulic valve (40) controlling the supply of pressure medium to the brake (21) is a hydraulic modulating valve.

3. A brake device according to claim 2, **characterized by the fact that** the hydraulic valve (40) is a proportional valve.

4. A brake device according to claim 3, **characterized by the fact that,** the proportional valve is provided with a position feedback (55) and that the position feedback (55) is an integral part of a position control loop subordinate to the pressure control loop.

5. A brake device according to any of the preceding claims, **characterized by the fact that** the brake (21) is arranged between the gearbox (13) and the generator (14).

6. A brake device according to any of the preceding claims, **characterized by the fact that** the brake (21; 21'; 52) has a brake calliper (27, 28) which acts on a brake disc (26) from two sides.

7. A brake device according to claim 6, **characterized by the fact that** a plurality of brake callipers (27, 28) distributed around the circumference of the brake disc (26) act upon the brake disc (26).

8. A brake device according to claim 9, **characterized by the fact that** the brake callipers (27, 28) act upon the brake disc (26) alternately.

9. A brake device according to any of claims 6 to 8, **characterized by** the **fact that** the brake is designed as a passive brake (21; 21').

10. A brake device according to any of claims 6 to 8, **characterized by the fact that** the brake is designed as an active brake (52).

11. A brake device according to claim 9, **characterized by the fact that** between the valve (40) controlling the pressure medium supply to the brake (21') and each brake calliper 27, 28) there is arranged a switching valve (101 or 102) which in its working position connects the cylinders (30, 31) of a brake calliper (27) to the valve (40) controlling the flow of pressure medium and in its rest position connects the cylinders (30, 31) of the brake callipers (27, 28) to a tank (104), and that between each switching valve (101, 102) and the tank (104) there is arranged a pressure compensator (106 or 112) which, together with a metering orifice (108 or 114), maintains constant the rate of flow of the pressure medium flowing to the tank (104) when the switching valves (101, 102) are in the rest position.

12. A brake device according to any of the preceding claims, **characterized by the fact that** the control device (44) can be switched between speed control and pressure control, whereby in the case of speed control the output signal (yₙ) of the speed controller (66) is fed to the pressure controller (65) as a pressure set value (pₛ) and in the case of pressure control the pressure set value (pₛ) is independent of the output signal (yₙ) of the speed controller (66).

13. A method for operating a brake device according to claim 12, **characterized by the fact that**
- for controlled braking of the rotor (12) from an operating speed the control device (44) is initially operated as a speed control, whereby, starting from a speed actual value (nₜ₁₀) at the beginning (t₁₀) of the braking operation, the speed set value (nₛ) is reduced after a first ramp function to a pre-selectable minimum value (nₘᵢₙ),
- that upon reaching the minimum value (nₘᵢₙ) the control device (44) is switched from speed control to pressure control, whereby, starting from a pressure actual value (pₜ₁₁) at the switchover time point (t₁₁), the pressure set value (pₛ) is changed after a second ramp function to a value (p_{Lö}) which corresponds to a complete release of the brake (21),
- that the control device (44) maintains the value (p_{Lö}) corresponding to the complete release of the brake (21) during a freewheeling period (t₁₂ to t₁₃), the length of which is determined such that the drive train consisting essentially of generator (14), brake disc (26), gearbox (13) and rotor (12) has relaxed, and
- that the rotor (12) is then braked to a standstill.

14. A method according to claim 13, **characterized by the fact that** once the freewheeling period (t₁₂ to t₁₃) has elapsed and starting from the speed reached at this time point (t₁₃), the rotor (12) is braked to a standstill in a speed-controlled manner after a third ramp function.

15. A method according to claim 13, **characterized by the fact that** once the freewheeling period (t₁₂ to t₁₃) has elapsed the rotor (12) is braked to a standstill in a pressure controlled manner after a fourth ramp function.

16. A method for operating a brake device according to claim 12, **characterized by the fact that**
- in the event of a brief disturbance of the electricity grid (19) the control device (44) is operated as a speed control, whereby the speed actual value (nₜ₀) is fed to the speed controller (66) as a speed set value (nₛ) at the beginning (t₀) of the disturbance,
- that if the disturbance has ended within a pre-selectable period (Δt) the pressure control loop of the hydraulic valve (40) is opened and a constant signal (x_{sNb}) is applied to the hydraulic valve (40), which results in a complete release of the brake (21), and
- that if the disturbance has not yet ended within the pre-selectable period (Δt) the rotor (12) is braked to a standstill in a controlled manner by the control device (44).

17. A method according to claim 16, **characterized by the fact that** the controlled braking is done as described in any of claims 12 to 14.

18. A method according to any of claims 13 to 17, **characterized by** the **fact that** during normal operation the pressure control loop is opened and the hydraulic valve (40) is acted upon by a constant signal (x_{sNb}), which results in complete release of the brake (21).

## Revendications

1. Dispositif de freinage pour une installation d'énergie éolienne avec un rotor convertissant l'énergie éolienne en un mouvement rotatif, lequel entraîne un générateur électrique via un engrenage dont l'énergie électrique produite peut alimenter un réseau électrique,
- avec un frein hydraulique pour le rotor,
- avec une valve hydraulique commandant l'alimentation en fluide de pression du frein et '
- avec un dispositif de régulation qui génère un signal de commande pour la valve hydraulique,
**caractérisé en ce**
- **que** le dispositif de régulation (44) présente une boucle de régulation de pression pour la pression (p) du fluide de pression alimentant le frein (21) et un régulateur de pression (65),
- **que** la boucle de régulation de pression reçoit le signal de sortie d'un capteur de pression (23) soumis à la pression (p) en tant que valeur réelle de pression (pᵢ) et
- **que** le régulateur de pression (65) forme le signal de commande (yₚ) pour la valve hydraulique (40) à partir de l'écart (x_{dp}) de la valeur réelle (pᵢ) de la pression par rapport à la valeur de consigne (pₛ) de la pression.

2. Dispositif de freinage selon la revendication 1, **caractérisé en ce que** la valve hydraulique (40) commandant l'alimentation en fluide de pression du frein (21) est une valve hydraulique continue.

3. Dispositif de freinage selon la revendication 2, **caractérisé en ce que** la valve hydraulique (40) est une valve proportionnelle.

4. Dispositif de freinage selon la revendication 3, **caractérisé en ce que** la valve proportionnelle est dotée d'une recopie de position (55) et que cette recopie de position (55) fait partie d'une boucle de régulation de position dépendante de la boucle de régulation de pression.

5. Dispositif de freinage selon l'une des revendications précédentes, **caractérisé en ce que** le frein (21) est placé entre l'engrenage (13) et le générateur (14).

6. Dispositif de freinage selon l'une des revendications précédentes, **caractérisé en ce que** le frein (21 ; 21' ; 52) présente une pince de freinage (27, 28) qui entre en prise sur deux côtés sur un disque de freinage (26).

7. Dispositif de freinage selon la revendication 6, **caractérisé en ce que** plusieurs pinces de freinage (27, 28) réparties sur le pourtour du disque de freinage (26) entrent en prise sur le disque de freinage (26).

8. Dispositif de freinage selon la revendication 9, **caractérisé en ce que** les pinces de freinage (27, 28) entrent en prise de manière alternée sur le disque de freinage (26).

9. Dispositif de freinage selon l'une des revendications 6 à 8, **caractérisé en ce que** le frein est conçu en tant que frein passif (21 ; 21').

10. Dispositif de freinage selon l'une des revendications 6 à 8, **caractérisé en ce que** le frein est conçu en tant que frein actif (52).

11. Dispositif de freinage selon la revendication 9, **caractérisé en ce qu'**une valve de commutation (101 ou 102) est disposée entre la valve (40) qui commande l'alimentation en fluide de pression du frein (21') et chaque pince de freinage (27, 28), laquelle valve de commutation (101 ou 102), en position de travail, relie les vérins (30, 31) d'une pince de freinage (27) à la valve (40) qui commande le débit de fluide de pression et qui, en position de repos, relie les vérins (30, 31) des pinces de freinage (27, 28) à un réservoir (104) et qu'une balance de pression (106 ou 112) se trouve entre chaque valve de commutation (101, 102) et le réservoir (104), balance qui, avec un orifice d'étranglement réglable (108 ou 114), maintient constante la quantité de fluide de pression qui s'écoule en direction du réservoir (104) lorsque les valves de commutation (101, 102) sont au repos.

12. Dispositif de freinage selon l'une des revendications précédentes, **caractérisé en ce que** le dispositif de régulation (44) est commutable entre la régulation de vitesse de rotation et la régulation de pression et que, dans le cas d'une régulation de vitesse de rotation, le régulateur de pression (65) reçoit le signal de sortie (yₙ) du régulateur de vitesse de rotation (66) comme valeur de consigne (pₛ) de pression et que, dans le cas d'une régulation de pression, la valeur de consigne (pₛ) de pression est indépendante du signal de sortie (yₙ) du régulateur de vitesse de rotation (66).

13. Méthode pour l'exploitation d'un dispositif de freinage selon la revendication 12, **caractérisé en ce**
- **que** pour le freinage contrôlé du rotor (12) à partir d'une vitesse de rotation de service, le dispositif de régulation (44) est tout d'abord exploité comme régulation de vitesse de rotation, la valeur de consigne (nₛ) de la vitesse de rotation étant réduite à partir de la valeur réelle (nₜ₁₀) de la vitesse de rotation au début (t₁₀) du freinage et après une première fonction de rampe jusqu'à une valeur minimale (nₘᵢₙ) pouvant être prédéfinie,
- **que** le dispositif de régulation (44) est commuté de la régulation de vitesse de rotation sur la régulation de pression lorsque la valeur minimale (nₘᵢₙ) est atteinte, la valeur de consigne (pₛ) de pression étant modifiée à partir de la valeur réelle (pₜ₁₁) de pression au moment de la commutation (t₁₁) et après une deuxième fonction de rampe, à une valeur (p_{Lö}) qui correspond à un desserrage total du frein (21),
- **que** le dispositif de régulation (44) maintient la valeur (P_{Lö}) correspondant au desserrage total du frein (21) pendant une période de roue libre (t₁₂ à t₁₃), la durée de laquelle période devant être dimensionnée de manière que le système d'entraînement principalement constitué du générateur (14), du disque de freinage (26), de l'engrenage (13) et du rotor (12) se détende, et
- **que** le rotor (12) est ensuite freiné jusqu'à l'arrêt.

14. Méthode selon la revendication 13, **caractérisé en ce que** le rotor (12), après écoulement de la période de roue libre (t₁₂ à t₁₃), à partir de la vitesse de rotation atteinte à ce moment (t₁₃), est freiné à vitesse contrôlée, après une troisième fonction de rampe, jusqu'à l'arrêt.

15. Méthode selon la revendication 13, **caractérisé en ce que** le rotor (12), après écoulement de la période de roue libre (t₁₂ à t₁₃), est freiné à pression contrôlée, après une quatrième fonction de rampe, jusqu'à l'arrêt.

16. Méthode pour l'exploitation d'un dispositif de freinage selon la revendication 12, **caractérisé en ce que**
- dans le cas d'une courte perturbation du réseau électrique (19), le dispositif de régulation (44) fonctionne comme régulation de vitesse de rotation, le régulateur de vitesse de rotation (66) recevant la valeur réelle (nₜ₀) de vitesse de rotation au début (t₀) de la perturbation comme valeur de consigne (nₛ) de vitesse de rotation
- qu'à l'achèvement de la perturbation en l'espace d'un temps prédéfini (Δt), la boucle de régulation de pression de la valve hydraulique (40) s'ouvre et la valve hydraulique (40) reçoit un signal constant (x_{sNb}) qui provoque le desserrage total du frein (21) et que
- si le dérangement persiste encore après écoulement de la période de temps prédéfinie (Δt), le rotor (12) est freiné de manière contrôlée jusqu'à l'arrêt par le dispositif de régulation (44).

17. Méthode selon la revendication 16, **caractérisé en ce que** le freinage contrôlé se fait conformément à l'une des revendications 12 à 14.

18. Méthode selon l'une des revendications 13 à 17, **caractérisé en ce que** la boucle de régulation de pression est ouverte en régime normal et que la valve hydraulique (40) reçoit un signal constant (x_{sNb}) qui provoque le desserrage total du frein (21).
